# EUROPEAN PATENT SPECIFICATION

(11) **EP 4 331 864 B1**
(45) Date of publication and mention of the grant of the patent: **26.02.2025**
(21) Application number: 23195123.7
(22) Date of filing: 04.09.2023
(51) Int. Cl.: B60C 3/00, B60C 13/02

(54) **A TIRE AND A PAIR OF TIRES FOR A DUAL WHEEL**
REIFEN UND REIFENPAAR FÜR EIN DOPPELRAD
PNEU ET PAIRE DE PNEUS POUR UNE ROUE DOUBLE

(30) Priority: 05.09.2022 EP 22193918
(43) Date of publication of application: 06.03.2024
(73) Proprietor: VOLVO TRUCK CORPORATION, 405 08 Göteborg (SE)
(72) Inventor: K S, Madhuchandra, 560050 Bangalore (IN); YVK, Anjan, 560024 Bangalore (IN)
(74) Representative: Valea AB

(56) References cited:
- KR-A- 970 033 977
- US-A1- 2021 260 935
- US-S- D 483 718

## Description

### TECHNICAL FIELD

The present invention relates to dual wheels used on vehicles, such as trucks and trailers. Specifically, the present invention relates to prevention of objects getting into a space between adjacent wheels of a dual wheel.

The invention can be applied in heavy-duty vehicles, such as trucks, buses, and construction equipment, and for trailers used with such vehicles. Although the invention be described with respect to a dual wheel, the invention is not restricted to dual wheel uses, but may also be used in other multiple wheels, such as triple wheels.

### BACKGROUND

Dual wheels are used on a vehicle to distribute load from the vehicle over a larger area of a surface on which the vehicle is supported by the wheels. In a dual wheel, two tires are attached to the vehicle side-by-side such that the two tires are rotatable about a same rotational axis. Typically, the tires are supported on a same wheel axle and often on a single rim or joint rim supporting both tires of each dual wheel.

A space is provided between the adjacent tires such that the tires do not touch in normal operation of the vehicle. A problem with dual wheels is that foreign objects, such as rocks, may be forced into the intermediate space(s) between the tires, leading to imbalance and premature wear of the tires, potentially leading to puncture of one or more of the tires.

KR0166514B1 discloses a dual wheel comprising two tires with a respective sidewall facing an intermediate space between the tires. Each tire is provided with a circumferential ridge protruding along a central axis of the tire from the respective sidewall into the intermediate space. The two ridges have a same diameter and jointly bridge across most of the intermediate space to thereby prevent foreign objects from being forced into the intermediate space. The ridges are provided with heat dissipation holes to allow heated air to leave the intermediate space.

KR20070018300A discloses a dual wheel comprising two tires with a respective sidewall facing an intermediate space between the tires. The dual wheel further comprises with a separate gap cover member positioned in the intermediate space, said gap cover member extending circumferentially about the rotational axis of the tires for sealing off the intermediate space such that foreign objects cannot move into the intermediate space.

US 2021/260935 A1 discloses a tire comprising a sidewall provided with ridges for providing improved fuel economy and resistance towards scratches.

US D 483 718 discloses an ornamental design for a tire tread and does not relate to any specific technical problem.

### SUMMARY

An object of the present invention is to provide alternative technology for preventing foreign objects to enter the intermediate space between the two tires of the dual wheel.

The tires of a pair of tires for a dual wheel could be of different design sold in matching pairs, following the first aspect described below. Alternatively, the tires of said pair of tires could be identical and sold separately following a second or third aspect described below. Claims 1-4 claim protection covering pairs of tires, whilst claims 5-10 claim protection for a single tire designed to be used together with second tire, for instance an identical tire.

According to the first aspect, the above-mentioned object is achieved by a pair of tires according to claim 1, with alternative embodiments defined by dependent claims 2-4.

The pair of tires comprises a first tire and a second tire to be arranged side-by-side when mounted on the dual wheel such that a first sidewall of the first tire faces a second sidewall of the second tire, with an intermediate space formed between the first sidewall and the second sidewall. The first sidewall is provided with first ridge means protruding from the first sidewall into the intermediate space. The second sidewall is provided with a second ridge means protruding from the second sidewall into the intermediate space. Further, the first ridge means and the second ridge means are configured such that, when the pair of tires is mounted on the dual wheel, the first ridge means and the second ridge means overlap along a rotational axis of the dual wheel, at least in a first load condition of the dual wheel, said overlap occurring along at least an angular portion of the circumference of the dual wheel. Said first load condition may be a load condition which is when the wheels are filled to their rated operating pressure for a given load of the vehicle, and the vehicle is supported on ground by the wheels. In other words, said first load condition corresponds to the presence of a vehicle load from the vehicle causing deformation of the tires, resulting in said overlap.

Moreover, the first ridge means and the second ridge means are configured such that they, at least under said first load condition, do not touch when the pair of tires is mounted on the dual wheel.

Further, the first ridge means comprises one or more first ridge portions being radially offset from one or more corresponding second ridge portions of said second ridge means, with respect to the rotational axis.

It should be noted that noted that in embodiments of the present invention, adjacent first ridge means and second ridge means of the two tires may be such that they do not touch when the two tires are mounted on the dual wheel. As such, in embodiments of the invention, adjacent first ridge means and second ridge means of the two tires do not touch for any load condition of the dual wheel. This can apply to any embodiment of the present invention.

The first ridge means and the second ridge means together bridge the intermediate space between the first sidewall and the second sidewall, thereby preventing foreign object entering the intermediate space. By configuring the first ridge means and the second ridge means such that they overlap along the rotational axis of the dual wheel, a foreign object would have to pass through a meandering path between the first ridge means and the second ridge means to be able to enter the intermediate space. Such a configuration of the dual tire thus further mitigates objects entering the intermediate space without requiring pressure of even any contact at all between the first ridge means and the second ridge means. Reduced contact and reduced contact pressure between the first ridge means and the second ridge means reduce wear and risk of damage to the tires of the dual wheel. At loading of the dual wheel by the vehicle, a lower portion of each tire tends to be deformed to a lower height and a larger width. Hence, the first sidewall and the second sidewall move closer to each other at loading of the dual tire at a lower portion of each tire. The first ridge means and the second ridge means are typically designed with this is mind, such that they have a suitable relative position or gap at the lower portion of the tires when the dual wheel is loaded. This also means that the gap between the first ridge means and the second ridge means typically is larger at an upper portion of the tires, potentially large enough to bring the first ridge means and the second ridge means to a position where they do not overlap along the rotational axis of the dual wheel at an upper portion of the dual wheel. Since foreign object tend to be forced towards the intermediate space from the side of the dual wheel facing the road, the overlap is most needed at the lower portion of the dual wheel. The radial offset enables use of thicker geometries of the first and second ridge means respectively and thus reduced the risk of a foreign object deforming the first and second ridge means respectively.

The first ridge means may comprise one first ridge portion extending along a whole circumference of the first sidewall.

By arranging the first ridge portion such that it extends along a whole circumference of the first sidewall, a continuous ridge is provided around the circumference, thus avoiding gaps at the end of the first ridge portion, thus reducing the risk of foreign objects, such as dirt, gravel, and stones, entering the intermediate space between the tires of the dual wheel. Further, the rigidity of the first ridge portion is improved, since the first ridge portion does not have any free ends.

The second ridge means may comprise one second ridge portion extending along a whole circumference of the second sidewall.

By arranging the second ridge portion such that it extends along a whole circumference of the first sidewall, a continuous ridge is provided around the circumference, thus avoiding gaps at the end of the second ridge portion, thus reducing the risk of foreign objects, such as dirt, gravel, and stones, entering the intermediate space between the tires of the dual wheel. Further, the rigidity of the second ridge portion is improved, since the second ridge portion does not have any free ends.

The first ridge means may be provided radially inwards of the second ridge means with respect to the rotational axis.

By providing the ridge means at different radial distance from the rotational axis of the dual wheel, the height/extend of the respective ridges can be increased without reducing the size of the other ridge means. This enables increased dimension of the ridge means, and thus enables use of more robust ridge means, withstanding higher local pressures from foreign objects forced against the ridge means.

According to a second aspect of the present invention, the above-mentioned object is also achieved by a tire according to claim 5, with alternative embodiments defined by dependent claims 6-10.

The tire is for a dual wheel and comprises a first sidewall and an opposite second sidewall. The first sidewall is provided with first ridge means and the second sidewall is provided second ridge means. The first ridge means and the second ridge means are configured such that when two such tires are arranged side-by-side on a dual wheel with first ridge means of one tire facing second ridge means of another tire, the facing first and second ridge means overlap along a rotational axis of the dual wheel, at least in a first load condition of the dual wheel, said overlap occurring along at least an angular portion of the circumference of the dual wheel.

The first ridge means and the second ridge means together bridge the intermediate space between the first sidewall and the second sidewall, thereby preventing foreign object entering the intermediate space. By configuring the first ridge means and the second ridge means such that they overlap along the rotational axis of the dual wheel, a foreign object would have to pass through a meandering path between the first ridge means and the second ridge means to be able to enter the intermediate space. Such a configuration of the dual tire thus further mitigates objects entering the intermediate space without requiring pressure of even any contact at all between the first ridge means and the second ridge means. Reduced contact and reduced contact pressure between the first ridge means and the second ridge means reduces wear and risk of damage to the tires of the dual wheel.

It should be noted that noted that in embodiments of the present invention, first ridge means and the second ridge means may be configured such that, when the pair of tires is mounted on the dual wheel, the first ridge means and the second ridge means overlap along a rotational axis of the dual wheel, said overlap occurring along at least an angular portion of the circumference of the dual wheel. As such, in embodiments of the present invention, the above-mentioned overlap could be achieved for any load condition of the dual wheel. This can apply to any embodiment of the present invention.

The first ridge means and second ridge means may be configured such that adjacent first ridge means and second ridge means of the two tires, at least under said first load condition, do not touch when the two tires are mounted on the dual wheel.

It should be noted that noted that in embodiments of the present invention, adjacent first ridge means and second ridge means of the two tires may be such that they do not touch when the two tires are mounted on the dual wheel. As such, in embodiments of the invention, adjacent first ridge means and second ridge means of the two tires do not touch for any load condition of the dual wheel. This can apply to any embodiment of the present invention.

Normal operating conditions do not include short-term impacts caused by passing uneven terrain at speed, but rather relate to driving on flat roads at normal operating speeds with normal loads for which the vehicle and tire are rated. By avoiding prolonged contact between the first ridge means and the second ridge means, friction between the first ridge means and the second ridge means is mitigated. Friction cause heating and premature wear of the tires.

The first ridge means may comprise one or more first ridge portions being radially offset from one or more corresponding second ridge portions of said second ridge means, with respect to the rotational axis.

The radial offset enables use of thicker geometries of the first and second ridge means respectively and thus reduced the risk of a foreign object deforming the first and second ridge means respectively.

The first ridge means may comprise one first ridge portion extending along a whole circumference of the first sidewall.

By arranging the first ridge portion such that it extends along a whole circumference of the first sidewall, a continuous ridge is provided around the circumference, thus avoiding gaps at the end of the first ridge portion, thus reducing the risk of foreign objects, such as dirt, gravel, and stones, entering the intermediate space between the tires of the dual wheel. Further, the rigidity of the first ridge portion is improved, since the first ridge portion does not have any free ends.

The second ridge means may comprise one second ridge portion extending along a whole circumference of the second sidewall.

By arranging the second ridge portion such that it extends along a whole circumference of the first sidewall, a continuous ridge is provided around the circumference, thus avoiding gaps at the end of the second ridge portion, thus reducing the risk of foreign objects, such as dirt, gravel, and stones, entering the intermediate space between the tires of the dual wheel. Further, the rigidity of the second ridge portion is improved, since the second ridge portion does not have any free ends.

The first ridge means may be provided radially inwards of the second ridge means with respect to the rotational axis.

According to a third aspect of the present invention, the above-mentioned object is also achieved by a tire for a dual wheel. The tire comprises a first sidewall and an opposite second sidewall. The first sidewall is provided with ridge means, and the ridge means is configured such that when two such tires are arranged side-by-side on a dual wheel with ridge means of one of said two tires facing another ridge means of another one of said two tires, the facing ridge means overlap along a rotational axis of the dual wheel, at least in a first load condition of the dual wheel, said overlap occurring along at least an angular portion of the circumference of the dual wheel.

The first ridge means and the second ridge means together bridge the intermediate space between the first sidewall and the second sidewall, thereby preventing foreign object entering the intermediate space. By configuring the first ridge means and the second ridge means such that they overlap along the rotational axis of the dual wheel, a foreign object would have to pass through a meandering path between the first ridge means and the second ridge means to be able to enter the intermediate space. Such a configuration of the dual tire thus further mitigates objects entering the intermediate space without requiring pressure of even any contact at all between the first ridge means and the second ridge means. Reduced contact and reduced contact pressure between the first ridge means and the second ridge means reduces wear and risk of damage to the tires of the dual wheel.

According to a fourth aspect of the present invention, the above-mentioned object is also achieved by a dual wheel according to claim 12.

The dual wheel comprises a pair of tires according to any one of claims 1-4 or two tires according to any one of claims 5-10.

As such, though purely by way of example, in the dual wheel according to the fourth aspect of the present invention, the first ridge means and the second ridge means - as well as the distance between the first sidewall and the second sidewall - may be configured such that: the first ridge means and the second ridge means overlap along the rotational axis of the dual wheel, at least in a first load condition of the dual wheel, the overlap occurring along at least an angular portion of the circumference of the dual wheel,
and
the first ridge means and the second ridge means, at least under the first load condition, do not touch when the pair of tires is mounted on the dual wheel.

It should be noted that noted that in embodiments of the present invention, first ridge means and the second ridge means may be configured such that, when the pair of tires is mounted on the dual wheel, the first ridge means and the second ridge means overlap along a rotational axis of the dual wheel, said overlap occurring along at least an angular portion of the circumference of the dual wheel. As such, in embodiments of the present invention, the above-mentioned overlap could be achieved for any load condition of the dual wheel. This can apply to any embodiment of the present invention.

It should be noted that noted that in embodiments of the present invention, adjacent first ridge means and second ridge means of the two tires may be such that they do not touch when the two tires are mounted on the dual wheel. As such, in embodiments of the invention, adjacent first ridge means and second ridge means of the two tires do not touch for any load condition of the dual wheel. This can apply to any embodiment of the present invention.

According to a fifth aspect of the present invention, the above-mentioned object is also achieved by a vehicle comprising at least one of the above-described dual wheel.

The vehicle may be a truck, a bus, a tractor, a construction machine, or a trailer.

The above aspects, accompanying claims, and/or examples disclosed herein above and below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the invention as described herein.

### BRIEF DESCRIPTION OF THE DRAWINGS

With reference to the appended drawings, below follows a more detailed description of embodiments of the invention cited as examples.

All figures are schematic and not drawn to scale.

Figs. 1a-1c schematically illustrate a dual wheel according to a first embodiment of the present invention.

Figs. 2a-2c schematically illustrate a dual wheel according to a second embodiment of the present invention.

Figs. 3a-3d schematically illustrate a dual wheel according to a third embodiment of the present invention.

Figs. 4a-4c schematically illustrate a dual wheel according to a fourth embodiment of the present invention.

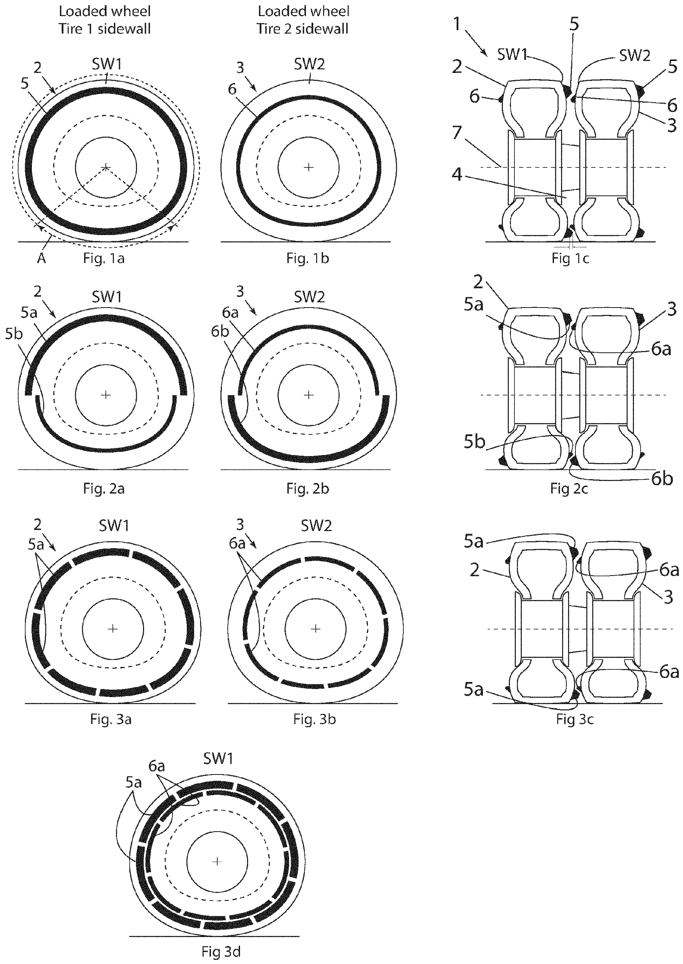

Figs. 1a, 2a, 3a and 4a show a respective embodiment of a first tire sidewall.
Figs. 1b, 2b, 3b and 4b show a respective embodiment of a second tire sidewall.
Figs. 1c, 2c, 3c and 4c show a respective cross-sectional schematic view of a respective embodiment of a dual wheel.
Fig. 3d shows how the two tires of fig. 3c can be rotationally aligned to combine radial ventilation and radial protection against foreign objects entering between tires of the dual wheel shown. This figure merely shows a schematic cross-sectional view of a plurality of first ridge portions being radially offset from one or more corresponding second ridge portions.

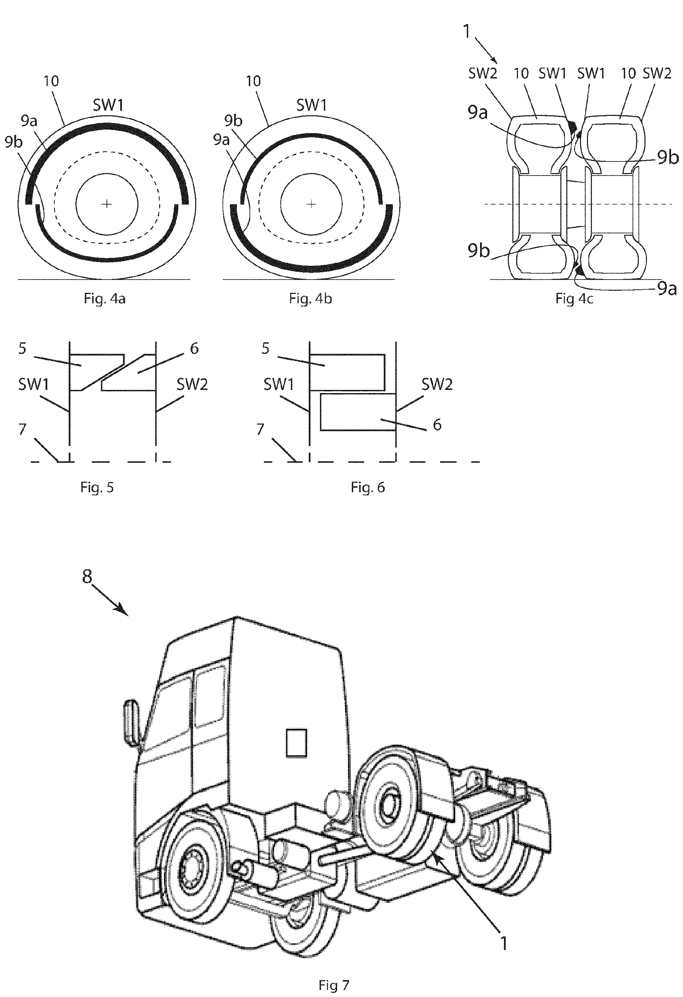

Fig. 5 shows a schematic cross-sectional view of an upper portion of a two cooperating ridge means of a respective tire of a dual wheel, said ridge means being configured with no radial offset. This figure is not drawn to scale.
Fig. 6 shows a schematic cross-sectional view of an upper portion of a two cooperating ridge means of a respective tire of a dual wheel, said ridge means being configured with radial offset providing for a greater overlap and larger dimensioning of the ridge means. This figure is not drawn to scale.
Fig. 7 shows a vehicle comprising two rear dual wheels.

### DETAILED DESCRIPTION OF EXAMPLE EMBODIMENTS OF THE INVENTION

With reference to the appended drawings, below follows a more detailed description of embodiments of the present invention cited as examples.

As mentioned above, an object of the present invention is to provide an alternative design of a dual wheel for preventing foreign objects to enter the intermediate space between the two tires of the dual wheel.

When studying figs. 1a-b, 2a-b, 3a-b and 4a-b, it should be understood that the tires are shown in a deformed state corresponding to a first load condition, said deformation being caused by loading from a vehicle to which the dual wheel is attached (vehicle not shown in these figures). Each tire is round when not loaded.

The general idea of the present invention is to provide ridge means in the form of one or more ridges/protrusions on at least one sidewall of each tire of the dual wheel, said ridge means being configured to overlap along a rotational axis of the dual wheel, as shown schematically in figs. 5 and 6. The ridge means are typically provided in the form of one or more ridges or ridge portions protruding from facing tire sidewalls of the dual wheel. The ridge means are typically integrally formed with the rest of the tire at manufacturing of each respective tire of the dual wheel, but could in an embodiment alternatively be provided in the form of ridges attached to an existing tire by any suitable method, such as by vulcanization or use of a suitable adhesive.

On a dual wheel, only one sidewall of each tire is facing a sidewall of the other tire. Hence, the ridge means is needed only on one side of each tire, although a tire could be provided with ridge means on both sidewalls of the tire as further described below.

When deciding on the positioning and shaping the ridge means of each facing sidewall, due care has to be taken to ensure that opposing ridge means of tires used together on a dual wheel fit together such that the ridge means overlap along the rotational axis of the dual wheel. For example, as shown in fig. 4a, a tire 10 provided with ridge means 9a, 9b on only one sidewall can be used together with an identical tire 10 (fig. 4b) on a dual wheel 1 (fig. 4c) with the tires 10 rotated such that the ridge means 9a, 9b of one tire 10 fits with a corresponding gap in the ridge means 9a, 9b of the other tire 10. Hence, this specific design of the ridge means 9a, 9b is such that identical tires can be used together on a dual wheel even though only one sidewall of the tire 10 is provided with ridge means, yet allowing facing ridge means to overlap along the rotational axis of the dual wheel when the identical tires are used together on a dual wheel, as shown in fig. 4c. Use of only one tire design, for a dual wheel reduces cost and supply chain complexity. However, a tire could alternatively also be provided with further ridge means on the opposite sidewall of a tire, such as in the embodiment shown in fig. 2a-c, enabling greater variation of the configuration of the ridge means since two differently designed ridge means can be provided on the opposing sidewalls of a tire. Embodiments with two differently designed ridge means on opposing sidewalls of a tire are shown in fig. 1a-c and 3a-c.

In other words, the present invention can be realized in a variety of configurations, as further described below. A pair of tires can be provided, where the tires are designed to be used together. Alternatively, a single tire can be provided, designed to be used on a dual wheel with an identical tire. The single tire could either be provided with ridge means on only one of its two opposite sidewalls, or on both of its opposite sidewalls.

### Pair of tires

A pair of tires is proposed herein. The pair of tires comprises a first tire 2 and a second tire 3 to be arranged side-by-side when mounted on the dual wheel 1 such that a first sidewall SW1 of the first tire 2 faces a second sidewall SW2 of the second tire 3, with an intermediate space 4 formed between the first sidewall SW1 and the second sidewall SW2. The first sidewall SW1 is provided with first ridge means 5 protruding from the first sidewall SW1 into the intermediate space 4. The second sidewall SW2 is provided with a second ridge means 6 protruding from the second sidewall SW2 into the intermediate space 4. Further, the first ridge means 5 and the second ridge means 6 are configured such that, when the pair of tires is mounted on the dual wheel 1, the first ridge means 5 and the second ridge means 6 overlap along a rotational axis 7 of the dual wheel 1, at least in a first load condition of the dual wheel 1, said overlap occurring along at least an angular portion A of the circumference of the dual wheel 1. Purely by way of example, as seen along the rotational axis 7, in at least the first load condition of the dual wheel 1, a portion of the first ridge means 5 is located closer to the second sidewall SW2 than at least a portion of the second ridge means 6. The first ridge means 5 and the second ridge means 6 together bridge the intermediate space between the first sidewall and the second sidewall, thereby preventing foreign object entering the intermediate space. By configuring the first ridge means 5 and the second ridge means 6 such that they overlap along the rotational axis of the dual wheel, a foreign object would have to pass through a meandering path between the first ridge means 5 and the second ridge means 6 to be able to enter the intermediate space. Such a configuration of the dual tire thus further mitigates objects entering the intermediate space without requiring pressure of even any contact at all between the first ridge means 5 and the second ridge means 6. Reduced contact and reduced contact pressure between the first ridge means 5 and the second ridge means 6 reduces wear and risk of damage to the tires of the dual wheel. At loading of the dual wheel by the vehicle, a lower portion of each tire tends to be deformed to a lower height and a larger width. Hence, the first sidewall and the second sidewall move closer to each other at loading of the dual tire at a lower portion of each tire. The first ridge means 5 and the second ridge means 6 are typically designed with this is mind, such that they have a suitable relative position or gap at the lower portion of the tires when the dual wheel is loaded. This also means that the gap between the first ridge means 5 and the second ridge means 6 typically is larger at an upper portion of the tires, potentially large enough to bring the first ridge means 5 and the second ridge means 6 to a position where they do not overlap along the rotational axis of the dual wheel at an upper portion of the dual wheel. Since foreign object tend to be forced towards the intermediate space from the side of the dual wheel facing the road, the overlap is most needed at the lower portion of the dual wheel.

The first ridge means 5 comprises one or more first ridge portions 5a being radially offset from one or more corresponding second ridge portions 6a of said second ridge means 6, with respect to the rotational axis 7.

The radial offset enables use of thicker geometries of the first 5 and second 6 ridge means respectively and thus reduced the risk of a foreign object deforming the first 5 and second ridge means 6 respectively. Fig. 5 shows an example of ridge means with no radial offset, whilst fig. 6 shows ridge means with radial offset.

The first ridge means 5 may comprise one first ridge 5a portion extending along a whole circumference of the first sidewall SW1. The circumference could be any path extending on the first sidewall SW1 such that it forms a closed loop all the way around the first sidewall SW1.

By arranging the first ridge portion 5a such that it extends along a whole circumference of the first sidewall, a continuous ridge is provided around the circumference, thus avoiding gaps at the end of the first ridge portion 5a, thus reducing the risk of foreign objects, such as dirt, gravel, and stones, entering the intermediate space between the tires of the dual wheel. Further, the rigidity of the first ridge portion 5a is improved, since the first ridge portion 5a does not have any free ends.

The second ridge means 6 may comprise one second ridge portion 6a extending along a whole circumference of the second sidewall SW2. The circumference could be any path extending on the second sidewall SW2 such that it forms a closed loop all the way around the second sidewall SW2.

By arranging the second ridge portion 6a such that it extends along a whole circumference of the first sidewall, a continuous ridge is provided around the circumference, thus avoiding gaps at the end of the second ridge portion 6a, thus reducing the risk of foreign objects, such as dirt, gravel, and stones, entering the intermediate space between the tires of the dual wheel. Further, the rigidity of the second ridge portion 6a is improved, since the second ridge portion 6a does not have any free ends.

The first ridge means 5 may be provided radially inwards of the second ridge means 6 with respect to the rotational axis 7. Such embodiments are shown in figs. 1a-c and 3a-c.

By providing the ridge means at different radial distance from the rotational axis of the dual wheel, the height/extend of the respective ridges can be increased without reducing the size of the other ridge means. This enables increased dimension of the ridge means, and thus enables use of more robust ridge means, withstanding higher local pressures from foreign objects forced against the ridge means.

### Single tire

As mentioned above, it is also proposed to provide a tire 2 for a dual wheel, said tire comprising a first sidewall SW1 and an opposite second sidewall SW2. As shown in figs. 1a-c, 2a-c and 3a-c, the first sidewall SW1 is provided with first ridge means 5 and the second sidewall SW2 is provided second ridge means 6. The first ridge means 5 and the second ridge means 6 are configured such that when two such tires 2, 3 are arranged side-by-side on a dual wheel 1 with first ridge means 5 of one tire 2 facing second ridge means 6 of another tire 3 and the two tires are deformed by a vehicle load from the vehicle 8, the facing first and second ridge means 5, 6 overlap along a rotational axis 7 of the dual wheel, said overlap occurring along at least an angular portion A of the circumference of the dual wheel 1.

The first ridge means 5 and the second ridge means 6 together bridge the intermediate space between the first sidewall and the second sidewall, thereby preventing foreign object entering the intermediate space. By configuring the first ridge means 5 and the second ridge means 6 such that they overlap along the rotational axis of the dual wheel, a foreign object would have to pass through a meandering path between the first ridge means 5 and the second ridge means 6 to be able to enter the intermediate space. Such a configuration of the dual tire thus further mitigates objects entering the intermediate space without requiring pressure of even any contact at all between the first ridge means 5 and the second ridge means 6. Reduced contact and reduced contact pressure between the first ridge means 5 and the second ridge means 6 reduces wear and risk of damage to the tires of the dual wheel.

The first ridge means 5 and second ridge means 6 may be configured such that adjacent first ridge means 5 and second ridge means 6 of the two tires, , at least under said first load condition , do not touch when the two tires 2 are mounted on the dual wheel 1.

The first load condition is typically a normal operating condition not including short-term impacts caused by passing uneven terrain at speed, but rather relate to driving on flat roads at normal operating speeds with normal loads for which the vehicle and tire are rated. By avoiding prolonged contact between the first ridge means 5 and the second ridge means 6, friction between the first ridge means 5 and the second ridge means 6 is mitigated. Friction cause heating and premature wear of the tires.

The first ridge means 5 may comprise one or more first ridge portions 5a, 5b being radially offset from one or more corresponding second ridge portions 6a, 6b of said second ridge means 6, with respect to the rotational axis 7.

The radial offset enables use of thicker geometries of the first and second ridge means 6 respectively and thus reduced the risk of a foreign object deforming the first and second ridge means 6 respectively.

As shown in figs. 1a-c, the first ridge means 5 may comprise one first ridge portion 5a extending along a whole circumference of the first sidewall SW1.

By arranging the first ridge portion 5a such that it extends along a whole circumference of the first sidewall, a continuous ridge is provided around the circumference, thus avoiding gaps at the end of the first ridge portion 5a, thus reducing the risk of foreign objects, such as dirt, gravel, and stones, entering the intermediate space between the tires of the dual wheel. Further, the rigidity of the first ridge portion 5a is improved, since the first ridge portion 5a does not have any free ends.

As shown in figs. 1a-c, the second ridge means 6 may comprise one second ridge portion 6a extending along a whole circumference of the second sidewall SW2.

By arranging the second ridge portion 6a such that it extends along a whole circumference of the first sidewall, a continuous ridge is provided around the circumference, thus avoiding gaps at the end of the second ridge portion 6a, thus reducing the risk of foreign objects, such as dirt, gravel, and stones, entering the intermediate space between the tires of the dual wheel. Further, the rigidity of the second ridge portion 6a is improved, since the second ridge portion 6a does not have any free ends.

As shown in figs. 1a-c and 3a-c, the first ridge means 5 may be provided radially inwards of the second ridge means 6 with respect to the rotational axis 7.

### Tire with ridge means on only one side

The above-mentioned object is also achieved by a tire 10 for a dual wheel 1. The tire 10 comprises a first sidewall SW1 and an opposite second sidewall SW2. The first sidewall SW1 is provided with ridge means 9a, 9b, and the ridge means 9a, 9b is configured such that when two such tires 10 are arranged side-by-side on a dual wheel 1 with ridge means 9a, 9b of one of said two tires 10 facing another ridge means 9b, 9a of another one of said two tires 10 and the two tires 10 are deformed by a vehicle load from the vehicle 8, the facing ridge means 9a, 9b overlap along a rotational axis 7 of the dual wheel 1, said overlap occurring along at least an angular portion A of the circumference of the dual wheel 1. The first ridge means 5 and the second ridge means 6 together bridge the intermediate space between the first sidewall and the second sidewall, thereby preventing foreign object entering the intermediate space. By configuring the first ridge means 5 and the second ridge means 6 such that they overlap along the rotational axis of the dual wheel, a foreign object would have to pass through a meandering path between the first ridge means 5 and the second ridge means 6 to be able to enter the intermediate space. Such a configuration of the dual tire thus further mitigates objects entering the intermediate space without requiring pressure of even any contact at all between the first ridge means 5 and the second ridge means 6. Reduced contact and reduced contact pressure between the first ridge means 5 and the second ridge means 6 reduces wear and risk of damage to the tires of the dual wheel.

As shown in figs. 1c, 2c, 3c and 4c, all of the above-described embodiments of tires can be used on a dual wheel 1.

Also proposed is a vehicle 8 provided with one or more such dual wheels.

It is to be understood that the present invention is not limited to the embodiments described above and illustrated in the drawings; rather, the skilled person will recognize that many changes and modifications may be made within the scope of the appended claims.

| | |
|---|---|
| 1 | dual wheel |
| 2 | first tire |
| 3 | second tire |
| 4 | intermediate space |
| 5 | first ridge means |
| 5a, 5b | first ridge portions |
| 6 | second ridge means |
| 6a, 6b | second ridge portions |
| 7 | rotational axis of dual wheel |
| 8 | vehicle |
| 9a | ridge means |
| 9b | ridge means |
| 10 | tire |
| SW1 | first sidewall |
| SW2 | second sidewall |
| A | angular portion |

*Table of reference numerals*

## Claims

1. A pair of tires for a dual wheel (1) of a vehicle (8), said pair of tires comprising a first tire (2) and a second tire (3) to be arranged side-by-side when mounted on the dual wheel (1) such that a first sidewall (SW1) of the first tire (2) faces a second sidewall (SW2) of the second tire (3), with an intermediate space (4) formed between the first sidewall (SW1) and the second sidewall (SW2),
the first sidewall (SW1) being provided with first ridge means (5) protruding from the first sidewall (SW1) into the intermediate space (4),
the second sidewall (SW2) being provided with a second ridge means (6) protruding from the second sidewall (SW2) into the intermediate space (4), and
the first ridge means (5) and the second ridge means (6) being configured such that, when the pair of tires is mounted on the dual wheel (1), the first ridge means (5) and the second ridge means (6) overlap along a rotational axis (7) of the dual wheel (1), at least in a first load condition of the dual wheel (1), said overlap occurring along at least an angular portion (A) of the circumference of the dual wheel (1),
wherein the first ridge means (5) and the second ridge means (6) are configured such that they, at least under said first load condition, do not touch when the pair of tires is mounted on the dual wheel (1), and
wherein the first ridge means (5) comprises one or more first ridge portions (5a, 5b) being radially offset from one or more corresponding second ridge portions (6a, 6b) of said second ridge means (6), with respect to the rotational axis (7).

2. A pair of tires according to claim 1, wherein the first ridge means (5) comprises one first ridge portion (5a, 5b) extending along a whole circumference of the first sidewall (SW1).

3. A pair of tires according to any one of claims 1-2, wherein the second ridge means (6) comprises one second ridge portion (6a, 6b) extending along a whole circumference of the second sidewall (SW2).

4. A pair of tires according to any one of claims 1-3, wherein the first ridge means (5) is provided radially inward of the second ridge means (6) with respect to the rotational axis (7).

5. A tire (2) for a dual wheel, said tire (2) comprising a first sidewall (SW1) and an opposite second sidewall (SW2),
the first sidewall (SW1) being provided with first ridge means (5),
the second sidewall (SW2) being provided second ridge means (6), and
the first ridge means (5) and the second ridge means (6) being configured such that when two such tires (2, 3) are arranged side-by-side on a dual wheel (1) with first ridge means (5) of one tire (2) facing second ridge means (6) of another tire (3), the facing first (5) and second (6) ridge means overlap along a rotational axis (7) of the dual wheel, at least in a first load condition of the dual wheel (1), said overlap occurring along at least an angular portion (A) of the circumference of the dual wheel (1), wherein the first ridge means (5) and second ridge means (6) are configured such that adjacent first ridge means (5) and second ridge means (6) of the two tires, at least in said first load condition , do not touch when the two tires (2) are mounted on the dual wheel (1).

6. A tire (2) according to claim 5, wherein the first ridge means (5) comprises one or more first ridge portions (5a) being radially offset from one or more corresponding second ridge portions (6a) of said second ridge means (6), with respect to the rotational axis (7).

7. A tire (2) according to claim 6, wherein the first ridge means (5) comprises one first ridge portion (5a) extending along a whole circumference of the first sidewall (SW1).

8. A tire (2) according to any one of claims 6-7, wherein the second ridge means (6) comprises one second ridge portion (6a) extending along a whole circumference of the second sidewall (SW2).

9. A tire (2) according to any one of claims 6-8, wherein the first ridge means (5) is provided radially inwards of the second ridge means (6) with respect to the rotational axis (7).

10. A tire (10) for a dual wheel (1), said tire (10) comprising a first sidewall (SW1) and an opposite second sidewall (SW2),
said first sidewall (SW1) being provided with ridge means (9a, 9b), and
the ridge means (9a, 9b) being configured such that when two such tires (10) are arranged side-by-side on a dual wheel (1) with ridge means (9a, 9b) of one of said two tires (10) facing another ridge means (9b, 9a) of another one of said two tires (10), the facing ridge means (9a, 9b) overlap along a rotational axis (7) of the dual wheel (1), said overlap occurring along at least an angular portion (A) of the circumference of the dual wheel (1), said facing ridge means (9a, 9b) being configured such that they, under normal operating conditions, do not touch when the two tires (10) are mounted on the dual wheel (1).

11. A dual wheel (1) comprising a pair of tires (2) according to any one of claims 1-4, said tires (2, 3) being arranged side-by-side for rotation about a rotational axis (7),
a distance between the first sidewall (SW1) and the second sidewall (SW2) being such that:
the first ridge means (5) and the second ridge means (6) overlap along the rotational axis (7) of the dual wheel (1), at least in a first load condition of the dual wheel (1), said overlap occurring along at least an angular portion (A) of the circumference of the dual wheel(1), and
said first ridge means (5) and said second ridge means (6) being configured such that they, at least under said first load condition, do not touch when the pair of tires is mounted on the dual wheel (1).

12. A vehicle (8) comprising at least one dual wheel (1) according to claim 11.

13. A vehicle (8) according to claim 12, said vehicle (8) being a truck, a bus, a tractor, a construction machine, or a trailer.

## Patentansprüche

1. Reifenpaar für ein Doppelrad (1) eines Fahrzeugs (8), das Reifenpaar umfassend einen ersten Reifen (2) und einen zweiten Reifen (3), die nebeneinander derart angeordnet sein sollen, wenn sie auf das Doppelrad (1) montiert sind, dass eine erste Seitenwand (SW1) des ersten Reifens (2) einer zweiten Seitenwand (SW2) des zweiten Reifens (3) zugewandt ist, wobei zwischen der ersten Seitenwand (SW1) und der zweiten Seitenwand (SW2) ein Zwischenraum (4) ausgebildet ist,
wobei die erste Seitenwand (SW1) mit einem ersten Gratmittel (5), das von der ersten Seitenwand (SW1) in den Zwischenraum (4) hineinragt, versehen ist,
wobei die zweite Seitenwand (SW2) mit einem zweiten Gratmittel (6), das von der zweiten Seitenwand (SW2) in den Zwischenraum (4) hineinragt, versehen ist, und
das erste Gratmittel (5) und das zweite Gratmittel (6) derart konfiguriert sind, dass,
wenn das Reifenpaar auf das Doppelrad (1) montiert ist, sich das erste Gratmittel (5) und das zweite Gratmittel (6) entlang einer Drehachse (7) des Doppelrads (1) überlappen, wobei, mindestens in einem ersten Lastzustand des Doppelrads (1), die Überlappung entlang mindestens eines Winkelabschnitts (A) des Umfangs des Doppelrads (1) auftritt,
wobei das erste Gratmittel (5) und das zweite Gratmittel (6) derart konfiguriert sind, dass sie sich, mindestens unter dem ersten Lastzustand, nicht berühren, wenn das Reifenpaar auf das Doppelrad (1) montiert ist, und
wobei das erste Gratmittel (5) einen oder mehrere erste Gratabschnitte (5a, 5b), die hinsichtlich der Drehachse (7) von einem oder mehreren entsprechenden zweiten Gratabschnitten (6a, 6b) des zweiten Gratmittels (6) radial versetzt sind, umfasst.

2. Reifenpaar nach Anspruch 1, wobei das erste Gratmittel (5) einen ersten Gratabschnitt (5a, 5b), der sich entlang eines gesamten Umfangs der ersten Seitenwand (SW1) erstreckt, umfasst.

3. Reifenpaar nach einem der Ansprüche 1 bis 2, wobei das zweite Gratmittel (6) einen zweiten Gratabschnitt (6a, 6b), der sich entlang eines gesamten Umfangs der zweiten Seitenwand (SW2) erstreckt, umfasst.

4. Reifenpaar nach einem der Ansprüche 1 bis 3, wobei das erste Gratmittel (5) hinsichtlich der Drehachse (7) radial innen des zweiten Gratmittels (6) bereitgestellt ist.

5. Reifen (2) für ein Doppelrad, der Reifen (2) umfassend eine erste Seitenwand (SW1) und eine gegenüberliegende zweite Seitenwand (SW2),
wobei die erste Seitenwand (SW1) mit dem ersten Gratmittel (5) versehen ist,
wobei die zweite Seitenwand (SW2) mit dem zweiten Gratmittel (6) versehen ist, und
das erste Gratmittel (5) und das zweite Gratmittel (6) derart konfiguriert sind, dass, wenn zwei derartige Reifen (2, 3) nebeneinander auf einem Doppelrad (1) angeordnet sind, wobei das erste Gratmittel (5) eines Reifens (2) dem zweiten Gratmittel (6) eines anderen Reifens (3) zugewandt ist, das sich zugewandte erste (5) und zweite (6) Gratmittel sich entlang einer Drehachse (7) des Doppelrads überlappen, wobei, mindestens in einem ersten Lastzustand des Doppelrads (1), die Überlappung entlang mindestens eines Winkelabschnitts (A) des Umfangs des Doppelrads (1) auftritt, wobei das erste Gratmittel (5) und das zweite Gratmittel (6) derart konfiguriert sind, dass das angrenzende erste Gratmittel (5) und zweite Gratmittel (6) der zwei Reifen sich, mindestens in dem ersten Lastzustand, nicht berühren, wenn die zwei Reifen (2) auf das Doppelrad (1) montiert sind.

6. Reifen (2) nach Anspruch 5, wobei das erste Gratmittel (5) einen oder mehrere erste Gratabschnitte (5a), die hinsichtlich der Drehachse (7) von einem oder mehreren entsprechenden zweiten Gratabschnitten (6a) des zweiten Gratmittels (6) radial versetzt sind, umfasst.

7. Reifen (2) nach Anspruch 6, wobei das erste Gratmittel (5) einen ersten Gratabschnitt (5a), der sich entlang eines gesamten Umfangs der ersten Seitenwand (SW1) erstreckt, umfasst.

8. Reifen (2) nach einem der Ansprüche 6 bis 7, wobei das zweite Gratmittel (6) einen zweiten Gratabschnitt (6a), der sich entlang eines gesamten Umfangs der zweiten Seitenwand (SW2) erstreckt, umfasst.

9. Reifen (2) nach einem der Ansprüche 6 bis 8, wobei das erste Gratmittel (5) hinsichtlich der Drehachse (7) radial innen des zweiten Gratmittels (6) bereitgestellt ist.

10. Reifen (10) für ein Doppelrad (1), der Reifen (10) umfassend eine erste Seitenwand (SW1) und eine gegenüberliegende zweite Seitenwand (SW2),
wobei die erste Seitenwand (SW1) mit dem Gratmittel (9a, 9b) versehen ist, und
das Gratmittel (9a, 9b) derart konfiguriert ist, dass, wenn zwei derartige Reifen (10) nebeneinander auf einem Doppelrad (1) angeordnet sind, wobei das Gratmittel (9a, 9b) eines der zwei Reifen (10) einem anderen Gratmittel (9b, 9a) eines anderen der zwei Reifen (10) zugewandt ist, die zugewandten Gratmittel (9a, 9b) sich entlang einer Drehachse (7) des Doppelrads (1) überlappen, wobei die Überlappung entlang mindestens eines Winkelabschnitts (A) des Umfangs des Doppelrads (1) auftritt, wobei die zugewandten Gratmittel (9a, 9b) derart konfiguriert sind, dass sie sich, unter normalen Betriebszuständen, nicht berühren, wenn die zwei Reifen (10) auf das Doppelrad (1) montiert sind.

11. Doppelrad (1), umfassend ein Reifenpaar (2) nach einem der Ansprüche 1 bis 4, wobei die Reifen (2, 3) für eine Drehung um eine Drehachse (7) nebeneinander angeordnet sind,
wobei ein Abstand zwischen der ersten Seitenwand (SW1) und der zweiten Seitenwand (SW2) derart ist, dass sich das erste Gratmittel (5) und das zweite Gratmittel (6) entlang der Drehachse (7) des Doppelrads (1) überlappen, wobei, mindestens in einem ersten Lastzustand des Doppelrads (1), die Überlappung entlang mindestens eines Winkelabschnitts (A) des Umfangs des Doppelrads (1) auftritt, und
das erste Gratmittel (5) und das zweite Gratmittel (6) derart konfiguriert sind, dass sie sich, mindestens unter dem ersten Lastzustand, nicht berühren, wenn das Reifenpaar auf das Doppelrad (1) montiert ist.

12. Fahrzeug (8), umfassend mindestens ein Doppelrad (1) nach Anspruch 11.

13. Fahrzeug (8) nach Anspruch 12, wobei das Fahrzeug (8) ein Lastkraftwagen, ein Bus, ein Traktor, eine Baumaschine oder ein Anhänger ist.

## Revendications

1. Paire de pneus pour une roue jumelée (1) d'un véhicule (8), ladite paire de pneus comprenant un premier pneu (2) et un second pneu (3) à disposer côte à côte lorsqu'ils sont montés sur la roue jumelée (1) de telle sorte qu'un premier flanc (SW1) du premier pneu (2) fait face à un second flanc (SW2) du second pneu (3), un espace intermédiaire (4) étant formé entre le premier flanc (SW1) et le second flanc (SW2),
le premier flanc (SW1) étant pourvu d'un premier moyen de crête (5) faisant saillie du premier flanc (SW1) jusque dans l'espace intermédiaire (4),
le second flanc (SW2) étant pourvu d'un second moyen de crête (6) faisant saillie du second flanc (SW2) jusque dans l'espace intermédiaire (4), et
le premier moyen de crête (5) et le second moyen de crête (6) étant conçus de telle sorte que,
lorsque la paire de pneus est montée sur la roue jumelée (1), le premier moyen de crête (5) et le second moyen de crête (6) se chevauchent le long d'un axe de rotation (7) de la roue jumelée (1), au moins dans un premier état de charge de la roue jumelée (1), ledit chevauchement se produisant le long d'au moins une partie angulaire (A) de la circonférence de la roue jumelée (1),
dans lequel le premier moyen de crête (5) et le second moyen de crête (6) sont conçus de telle sorte qu'ils ne se touchent pas, au moins dans ladite première condition de charge, lorsque la paire de pneus est montée sur la roue jumelée (1), et
dans lequel le premier moyen de crête (5) comprend une ou plusieurs premières parties de crête (5a, 5b) décalées radialement par rapport à une ou plusieurs secondes parties de crête (6a, 6b) correspondantes dudit second moyen de crête (6), par rapport à l'axe de rotation (7).

2. Paire de pneus selon la revendication 1, dans laquelle le premier moyen de crête (5) comprend une première partie de crête (5a, 5b) s'étendant sur toute une circonférence du premier flanc (SW1).

3. Paire de pneus selon l'une quelconque des revendications 1 et 2, dans laquelle le second moyen de crête (6) comprend une seconde partie de crête (6a, 6b) s'étendant sur toute une circonférence du second flanc (SW2).

4. Paire de pneus selon l'une quelconque des revendications 1 à 3, dans laquelle le premier moyen de crête (5) est situé radialement à l'intérieur du second moyen de crête (6) par rapport à l'axe de rotation (7).

5. Pneu (2) pour une roue jumelée, ledit pneu (2) comprenant un premier flanc (SW1) et un second flanc opposé (SW2),
le premier flanc (SW1) étant pourvu d'un premier moyen de crête (5),
le second flanc (SW2) étant pourvu d'un second moyen de crête (6), et
le premier moyen de crête (5) et le second moyen de crête (6) étant conçus de telle sorte que lorsque deux tels pneus (2, 3) sont disposés côte à côte sur une roue jumelée (1), le premier moyen de crête (5) d'un pneu (2) faisant face au second moyen de crête (6) d'un autre pneu (3), les premier (5) et second (6) moyens de crête en regard se chevauchent le long d'un axe de rotation (7) de la roue jumelée, au moins dans un premier état de charge de la roue jumelée (1), ledit chevauchement se produisant le long d'au moins une partie angulaire (A) de la circonférence de la roue jumelée (1), dans lequel le premier moyen de crête (5) et le second moyen de crête (6) sont conçus de telle sorte qu'un premier moyen de crête (5) et un second moyen de crête (6) adjacents des deux pneus, au moins dans ledit premier état de charge, ne se touchent pas lorsque les deux pneus (2) sont montés sur la roue jumelée (1).

6. Pneu (2) selon la revendication 5, dans lequel le premier moyen de crête (5) comprend une ou plusieurs premières parties de crête (5a) décalées radialement par rapport à une ou plusieurs secondes parties de crête (6a) correspondantes dudit second moyen de crête (6), par rapport à l'axe de rotation (7).

7. Pneu (2) selon la revendication 6, dans lequel le premier moyen de crête (5) comprend une première partie de crête (5a) s'étendant sur toute une circonférence du premier flanc (SW1).

8. Pneu (2) selon l'une quelconque des revendications 6 à 7, dans lequel le second moyen de crête (6) comprend une seconde partie de crête (6a) s'étendant sur toute une circonférence du second flanc (SW2).

9. Pneu (2) selon l'une quelconque des revendications 6 à 8, dans lequel le premier moyen de crête (5) est situé radialement à l'intérieur du second moyen de crête (6) par rapport à l'axe de rotation (7).

10. Pneu (10) pour une roue jumelée (1), ledit pneu (10) comprenant un premier flanc (SW1) et un second flanc opposé (SW2),
ledit premier flanc (SW1) étant pourvu de moyens de crête (9a, 9b), et
les moyens de crête (9a, 9b) étant conçus de telle sorte que, lorsque deux tels pneus (10) sont disposés côte à côte sur une roue jumelée (1), les moyens de crête (9a, 9b) de l'un desdits deux pneus (10) en regard des autres moyens de crête (9b, 9a) d'un autre desdits deux pneus (10), les moyens de crête (9a, 9b) en regard se chevauchent le long d'un axe de rotation (7) de la roue jumelée (1), ledit chevauchement se produisant le long d'au moins une partie angulaire (A) de la circonférence de la roue jumelée (1), lesdits moyens de crête (9a, 9b) en regard étant conçus de telle sorte que, dans des conditions de fonctionnement normales, ils ne se touchent pas lorsque les deux pneus (10) sont montés sur la roue jumelée (1).

11. Roue jumelée (1) comprenant une paire de pneus (2) selon l'une quelconque des revendications 1 à 4, lesdits pneus (2, 3) étant disposés côte à côte pour tourner autour d'un axe de rotation (7),
une distance entre le premier flanc (SW1) et le second flanc (SW2) étant telle que : le premier moyen de crête (5) et le second moyen de crête (6) se chevauchent le long de l'axe de rotation (7) de la roue jumelée (1), au moins dans un premier état de charge de la roue jumelée (1), ledit chevauchement se produisant le long d'au moins une partie angulaire (A) de la circonférence de la roue jumelée (1), et
ledit premier moyen de crête (5) et ledit second moyen de crête (6) étant conçus de telle sorte qu'ils ne se touchent pas, au moins dans ladite première condition de charge, lorsque la paire de pneus est montée sur la roue jumelée (1).

12. Véhicule (8) comprenant au moins une roue jumelée (1) selon la revendication 11.

13. Véhicule (8) selon la revendication 12, ledit véhicule (8) étant un camion, un bus, un tracteur, un engin de chantier, ou une remorque.
